Europäisches Patentamt

European Patent Office

Office européen des brevets

(19)

(11) Veröffentlichungsnummer: **0 021 127 B1**

(12) **EUROPÄISCHE PATENTSCHRIFT**

(45) Veröffentlichungstag der Patentschrift:
03.10.84

(21) Anmeldenummer: 80103043.8

(22) Anmeldetag: 31.05.80

(51) Int. Cl.³: **C 01 G 1/02,** C 01 B 13/22, C 01 B 33/18

(54) Verfahren zur pyrogenen Herstellung von feinstteiligem Oxid eines Metalls und/oder eines Metalloids.

(30) Priorität: 08.06.79 DE 2923182

(43) Veröffentlichungstag der Anmeldung:
07.01.81 Patentblatt 81/1

(45) Bekanntmachung des Hinweises auf die Patenterteilung:
03.10.84 Patentblatt 84/40

(84) Benannte Vertragsstaaten:
**BE DE FR GB**

(56) Entgegenhaltungen:
DE - A - 2 005 010
DE - A - 2 153 671
DE - A - 2 533 925
DE - A - 2 849 851
DE - B - 1 244 125
DE - C - 1 150 955

(73) Patentinhaber: **Degussa Aktiengesellschaft, Weissfrauenstrasse 9, D-6000 Frankfurt am Main 1 (DE)**

(72) Erfinder: **Schmid, Josef, Fr.-Ebert-Strasse 10, D-7888 Rheinfelden (DE)**
Erfinder: **Lange, Ludwig, Dr., Mühlenbach 40, D-5040 Brühl (DE)**
Erfinder: **Klebe, Hans, Dr., Ernst-Reuter-Strasse 6, D-7888 Rheinfelden (DE)**
Erfinder: **Schutte, Dieter, Dr., Ernst-Reuter-Strasse 16, D-7888 Rheinfelden (DE)**

## Beschreibung

Die Erfindung betrifft ein Verfahren zur pyrogenen Herstellung von feinstteiligem Oxid eines Metalls und/oder Metalloids, bei welchem als Ausgangsstoff eine verdampfbare Halogenverbindung des Metalls und/oder Metalloids eingesetzt wird und bei welchem das während der Bildung des Oxides des Metalls und/oder Metalloids als Nebenprodukt gebildete elementare Halogen während des Abkühlens der Reaktionsprodukte mit zusätzlich eingeführtem gasförmigem Wasserstoff unterhalb der Reaktionstemperatur des Knallgasgemisches, bestehend aus dem zusätzlich eingeführten gasförmigen Wasserstoff und dem in den Reaktionsgasen enthaltenen Sauerstoff, zu Halogenwasserstoff umgesetzt wird.

Bei der pyorgenen Herstellung von feinstteiligem Oxid eines Metalls und/oder Metalloids werden flüchtige oder verdampfbare Verbindungen des Metalls und/oder Metalloids zusammen mit brennbaren oder Wasserdampf bildenden Gasen entweder getrennt oder in Mischung einem Brenner zugeführt.

Dabei werden das brennbare und das Sauerstoff enthaltende Gas in einem solchen Mengenverhältnis, welches sowohl eine vollständige Verbrennung des brennbaren Gases als auch die Hydrolyse der verdampfbaren Verbindung des Metalls und/oder Metalloids gewährleistet, zugeführt.

Werden als Ausgangsstoffe anorganische oder organische Halogenverbindungen des Metalls und/oder Metalloids eingesetzt, so fallen das Metalloxid und/oder Metalloidoxid gemeinsam mit einem Halogenwasserstoff enthaltenden Abgas, welches in entsprechenden Abscheidevorrichtungen von dem Metall und/oder Metalloidoxid abgetrennt wird, an. In einer Nebenreaktion wird elementares Halogen gebildet. Je nach Führung der Reaktionsbedingungen für die Bildung des Metalloxids und/oder Metalloidoxides entstehen, bezogen auf die Menge an gebildetem Halogenwasserstoff, 6 bis 10 Gew.-% elementares Halogen.

Es ist bekannt, bei einem pyrogenen Verfahren zur Herstellung von Oxiden eines Metalls und/oder Metalloids das entstandene elementare Halogen, z. B. Chlor, aus dem Reaktionsabgas zu entfernen, indem man das gebildete elementare Halogen mit Wasserstoff während des Abkühlens der Reaktionsprodukte unterhalb der Reaktionstemperatur des Wasserstoffs mit dem in dem Reaktionsabgas enthaltenen Sauerstoff reduziert (DE-A-2 533 925).

Bei diesem bekannten Verfahren, bei welchem SiCl$_4$ (Siliciumtetrachlorid) als Ausgangsstoff für die Herstellung von Siliciumdioxid verwendet wird, durchläuft das entstandene Gemisch aus Reaktionsabgas und Siliciumdioxid innerhalb einer relativ langen Kühlstrecke ein Temperaturgefälle von 1000 bis 200 °C während des Abkühlens. Der zusätzliche Wasserstoff wird in einem Bereich der Kühlstrecke eingeführt, in welchem die Reaktionsabgase noch eine Temperatur von 500 bis 700 °C aufweisen. Eine Zugabe des Wasserstoffes bei einer Temperatur über 700 °C ist nicht zu empfehlen, da hier bereits eine Reaktion des Wasserstoffes mit dem Sauerstoff eintritt. Die Zugabe des Wasserstoffes bei einer Temperatur von unter 500 °C ist ebenfalls nicht zu empfehlen, da hier die Reaktionsgeschwindigkeit der Reaktion des Wasserstoffes mit dem elementaren Chlor zu langsam ist.

Die besten Ergebnisse können erzielt werden, wenn man den elementaren Wasserstoff bei einer Temperatur zwischen 550 und 630 °C einleitet.

Der genaue Einleitungspunkt für den elementaren Wasserstoff in der Kühlstrecke ist lastabhängig. D. h., bei produktionsbedingten Änderungen in der Strömungsgeschwindigkeit muss die Einleitungsstelle für den elementaren Wasserstoff in der Kühlstrecke verlegt werden.

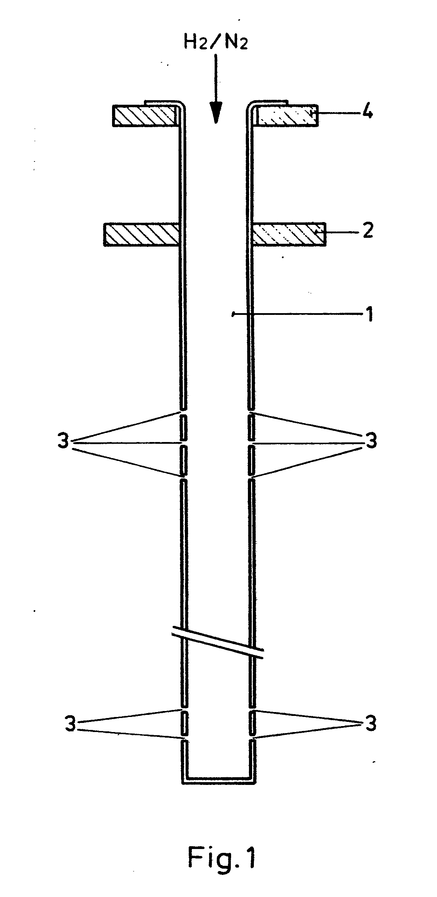

Für die Einleitung des Wasserstoffes wird ein Rohr verwendet, welches in seiner Länge dem Durchmesser der Kühlstrecke entspricht. Dieses Rohr weist in seinem Mantel zwei Reihen von Bohrungen auf, durch welche der Wasserstoff in die Reaktionsabgase eingeleitet wird. Eine Querschnittzeichnung eines derartigen Einleitungsrohres zeigt Fig. 1.

Gegenstand der Anmeldung DE-A-2 849 851 ist ein Verfahren zur pyrogenen Herstellung von feinstteiligem Oxid eines Metalls und/oder Metalloids, bei welchem als Ausgangsstoff eine verdampfbare Halogenverbindung des Metalls und/oder Metalloids eingesetzt wird und bei welchem das während der Bildung des Oxides des Metalls und/oder Metalloids gebildete elementare Halogen während des Abkühlens der Reaktionsprodukte mit zusätzlich eingeführtem gasförmigem Wasserstoff unterhalb der Reaktionstemperatur des Knallgasgemisches, bestehend aus dem zusätzlich eingeführten gasförmigen Wasserstoff und dem in den Reaktionsabgasen enthaltenen Sauerstoff, zu Halogenwasserstoff umgesetzt wird, wobei man den gasförmigen Wasserstoff mittels mindestens eines Doppelmantelrohres in die Kühlstrecke einleitet, wobei man zusätzlich mittels demselben Doppelmantelrohr ein Inertgas, welches zwischen dem äusseren und inneren Mantel des Doppelmantelrohres geführt wird, einleitet.

Gegenstand der Erfindung ist ein Verfahren zur pyrogenen Herstellung von feinteiligem Oxid eines Metalls und/oder Metalloids, bei welchem als Ausgangsstoff eine verdampfbare Halogenverbindung des Metalls und/oder Metalloids eingesetzt wird und bei welchem das während der Bildung des Oxides des Metalls und/oder Metalloids gebildete elementare Halogen während des Abkühlens der Reaktionsprodukte mit zusätzlich eingeführtem, gasförmigem Wasserstoff unterhalb der Reaktionstemperatur des Knallgasgemisches, bestehend aus dem zusätzlich eingeführten gasförmigen Wasserstoff und dem in den Reaktionsabgasen enthaltenen Sauerstoff, zu Halogenwasserstoff umgesetzt wird, welches dadurch gekennzeichnet ist, dass man den gasförmigen Wasserstoff mit einem Inertgas mischt und mittels eines geschlossenen Rohres mit mehreren Bohrungen in der Wandung in die Kühlstrecke einleitet.

Die Menge an zusätzlichem Wasserstoff richtet sich nach den Reaktionsbedingungen für das herzustellende spezifische Metalloxid bzw. Metalloidoxid. Dabei kann soviel Wasserstoff zugegeben werden, dass in dem endgültig erhaltenen Abgas eine Menge an Wasserstoff von 1,6 bis 2,0 Vol.-% gemessen wird.

Als Einleitrohr wird ein Rohr mit mehreren Öffnungen verwendet, wie es in Fig. 1 dargestellt wird.

Die Zugabe des Wasserstoff-Inertgas-Gemisches kann über die gesamte Kühlstrecke an mehreren, z. B. 3 bis 6 Stellen, erfolgen, wobei an jeder Stelle ein Einfachrohr eingesetzt wird.

In einer bevorzugten Ausführungsform der Erfindung leitet man das Wasserstoff-Inertgas-Gemisch bei einer Temperatur von 500 bis 700 °C, insbesondere zwischen 550 und 630 °C, in die Kühlstrecke ein.

Als Inertgas kann man Edelgase, Kohlendioxid oder insgesondere Stickstoff verwenden. Es kann in einer Menge von 20 bis 200 m³/h, vorzugsweise 50 bis 150 m³/h, eingesetzt werden.

Als Ausgangsstoff für die Herstellung der Metalloxide bzw. Metalloidoxide kann man verdampfbare Halogenverbindungen der Metalle Aluminium oder Titan bzw. der Metalloide (Halbmetalle) Silicium oder Germanium verwenden.

Zur Herstellung von Mischoxiden verschiedener Elemente kann als Ausgangsstoff ein Gemisch der verdampfbaren Halogenverbindungen der entsprechenden Elemente eingesetzt werden.

In einer vorzugsweisen Ausführungsform kann als Halogenverbindung das entsprechende Chlorid der Metalle bzw. Metalloide als Ausgangsstoff verwendet werden. Aber auch organische Halogenverbindungen können eingesetzt werden. So ist für die Herstellung von Siliciumdioxid die Verwendung von $SiHCl_3$, $SiCl_2H_2$, $SiCl_4$, $CH_3\text{-}SiCl_3$, $(CH_3)_2\text{-}SiCl_2$, $(CH_3)_3\text{-}SiCl$ $CH_3\text{-}CH_2\text{-}SiCl_3$, oder $(CH_3\text{-}CH_2)_2$ $SiCl_2$ möglich.

Durch die gleichzeitige Zugabe des Inertgases mit dem Wasserstoff kann man die Temperatur an der Einleitstelle beeinflussen, so dass bei Strömungsänderungen ein Verlegen der Einleitstelle vermieden werden kann. So kann die Einleitung des Wasserstoff-Inertgas-Gemisches an einer Stelle erfolgen, bei welcher die Temperatur der Reaktionsabgase so hoch ist, dass ein sofortiges Abbrennen des Wasserstoffes mit dem Sauerstoff erfolgen würde, ohne dass dieses unerwünschte Abbrennen eintritt. Vorteilhaft ist weiterhin, dass durch die Inertgaseinleitung das Einleitungsrohr für den Wasserstoff gekühlt wird und somit länger haltbar ist, und die Korrosion unterdrückt werden kann. Durch die Einleitung von Inertgas wird zusätzlich die Ablagerung von Metalloxid bzw. Metalloidoxid auf dem Einleitungsrohr verhindert.

Das erfindungsgemässe Verfahren wird anhand der Zeichnung näher erläutert und beschrieben:
Es zeigt:
Fig. 1 ein Leitungsrohr für das Wasserstoff-Inertgas-Gemisch.

Gemäss Fig. 1 ist das Einleitungsrohr 1 in der Wandung der Kühlstrecke 2 so befestigt, dass es mit seiner Länge dem Durchmesser der Kühlstrecke entspricht. Das Einleitungsrohr 1 weist zwei Reihen von Bohrungen 3 in der Wandung auf. Das Wasserstoff-Stickstoff-Gemisch wird über eine Leitung, welche an dem Flansch 4 befestigt ist, in das Einleitungsrohr 1 eingeführt und strömt durch die Bohrung 3 in die Kühlstrecke ein.

## Patentanspruch

Verfahren zur pyrogenen Herstellung von feinteiligem Oxid eines Metalls und/oder Metalloids, bei welchem als Ausgangsstoff eine verdampfbare Halogenverbindung des Metalls und/oder Metalloids eingesetzt wird und bei welchem das während der Bildung des Oxides des Metalls und/oder Metalloids gebildete elementare Halogen während des Abkühlens der Reaktionsprodukte mit zusätzlich eingeführtem gasförmigem Wasserstoff unterhalb der Reaktionstemperatur des Knallgasgemisches, bestehend aus dem zusätzlich eingeführten gasförmigen Wasserstoff und dem in den Reaktionsabgasen enthaltenen Sauerstoff, zu Halogenwasserstoff umgesetzt wird, dadurch gekennzeichnet, dass man den gasförmigen Wasserstoff mit einem Inertgas mischt und mittels eines geschlossenen Rohres mit mehreren Bohrungen in der Wandung in die Kühlstrecke einleitet.

## Claim

A process for the pyrogenic production of a finely-divided oxide of a metal and/or a metalloid, in which a vaporisable halogen compound of the metal and/or the metalloid is used as the starting material and in which the elementary halogen which results during formation of the oxide of the metal and/or of the metalloid is reacted with gaseous hydrogen while the reaction products are cooling, to produce hydrogen halide, which gaseous hydrogen is additionally introduced below the reaction temperature of the detonating gas mixture consisting of the additionally introduced gaseous hydrogen and the oxygen which is contained in the reaction waste gases, characterised in that the gaseous hydrogen is mixed with an inert gas and is fed into the cooling stretch by means of a sealed pipe which has several bores in the wall thereof.

## Revendication

Procédé pour la production pyrogénée d'un oxyde de métal et/ou de métalloïde finement divisé, où l'on utilise comme matière de départ, un composé halogéné vaporisable du métal et/ou du métalloïde et où l'halogène élémentaire, formé pendant la formation de l'oxyde de métal et/ou du métalloïde, est transformé en halogénure d'hydrogène pendant le refroidissement du produit réactionnel, par réaction avec de l'hydrogène gazeux supplémentaire introduit, à une température inférieure à la température de réaction du gaz oxhydrique constitué par l'hydrogène supplémentaire et l'oxygène contenu dans les gaz qui se dégagent de la réaction, procédé caractérisé en ce que l'on mélange l'hydrogène gazeux avec un gaz inerte et l'introduit dans le circuit de refroidissement au moyen d'un tube fermé dont la paroi comporte plusieurs perforations.

H₂/N₂

Fig.1